Europäisches Patentamt

European Patent Office

Office européen des brevets

(11) Numéro de publication: **0 017 692**
**B1**

(12) **FASCICULE DE BREVET EUROPEEN**

(45) Date de publication du fascicule du brevet: **17.04.85**

(51) Int. Cl.⁴: **H 04 N 9/27**

(21) Numéro de dépôt: **79400593.4**

(22) Date de dépôt: **28.08.79**

(54) Alimentation très haute tension du type commutable.

(30) Priorité: **08.09.78 FR 7825851**

(43) Date de publication de la demande:
**29.10.80 Bulletin 80/22**

(45) Mention de la délivrance du brevet:
**17.04.85 Bulletin 85/16**

(84) Etats contractants désignés:
**AT BE DE GB IT NL**

(56) Documents cités:
**DE-A-1 134 736**
**FR-A-2 067 926**
**FR-A-2 218 698**
**US-A-3 892 977**

(73) Titulaire: **THOMSON-CSF**
**173, Boulevard Haussmann**
**F-75379 Paris Cedex 08 (FR)**

(72) Inventeur: **Ragot, Claude**
**"Thomson-CSF" - SCPI 173, bld Haussmann**
**F-75360 Paris Cedex 08 (FR)**

(74) Mandataire: **Benoit, Monique et al**
**THOMSON-CSF SCPI 173, Bld Haussmann**
**F-75379 Paris Cedex 08 (FR)**

Courier Press, Leamington Spa, England.

EP 0 017 692 B1

## Description

La présente invention concerne une alimentation très haute tension du type commutable, capable de produire une très haute tension (THT) pouvant prendre différentes valeurs à des instants déterminés et de passer de l'une à l'autre.

Une application particulièrement intéressante pour une alimentation de ce type est son utilisation dans les tubes cathodiques multichromes à pénétration, qui équipent les consoles de visualisation. Dans les tubes multichromes à pénétration, l'écran est constitué par des couches multiples, dans la pratique actuelle, de deux ou trois couches fluorescentes de couleurs différentes séparées par une couche barrière. Suivant la tension d'accélération finale appliquée au faisceau d'électrons, ceux-ci excitent l'une ou l'autre des couches de couleur et font apparaître la couleur correspondante.

Ainsi pour une tension d'accélération basse, seule la couche fluorescente située du côté du canon à électrons est excitée et la couleur rouge apparaît pour une tension de l'ordre de 10KV. Pour une tension d'accélération plus elevée, par exemple 18KV, c'est la couche fluorescente, côté avant de l'écran qui est excitée, donnant la couleur verte. Pour les valeurs de tensions intermédiaires, on obtient un mélange des deux couleurs précédentes, ceci dans un tube à deux couches. Dans un tube à trois couches fluorescentes, le nombre des couleurs et des mélanges de couleurs est plus élevé.

On conçoit donc que pour présenter des images colorées avec des tubes à pénétration, il soit nécessaire de passer rapidement d'une valeur de la très haute tension d'alimentation du tube à une autre. De fait, un tube multichrome à pénétration ne peut émettre simultanément plusieurs couleurs, il ne peut le faire que séquentiellement au rythme de la commutation de la tension anodique nécessaire. Cependant la persistance de l'impression rétinienne permet à l'oeil de ne voir qu'une seule image colorée, c'est-à-dire une image unique en plusieurs couleurs.

Le changement de couleur pour un tube multichrome est produit par variation de sa tension anodique. Dans le cas de la déviation électromagnétique, l'angle de déviation du faisceau d'électrons varie alors en raison inverse de la racine carrée de cette tension anodique. On corrige le balayage en fonction de cette loi pour que la variation de la tension anodique, nécessaire au fonctionnement du tube n'entraîne pas de variations des dimensions de l'image.

L'énergie d'un électron est différente suivant la tension d'anode donc de la couleur. De plus, le rendement des phosphores formant les couches est différent; il apparaît nécessaire de corriger le courant d'anode pour obtenir une luminance qui ne varie pas en fonction des couleurs qui sont formées sur l'écran du tube.

La correction de la déviation du faisceau d'électrons et de la luminance du tube cathodique ne présente pas des difficultés qui n'aient pas trouvé de solutions acceptables.

Par contre les variations de la tension d'anode posent des problèmes liés au fait que la tension à commuter est importante, de l'ordre de 8 KV au moins, et que cette commutation qui doit être effectuée en un temps court pour laisser un temps de tracé de l'image suffisant se fait sur une capacité d'anode relativement importante, de l'ordre de 500 pf au moins.

Il est donc nécessaire que la valeur de la tension d'anode soit très précise pour que le spot soit correctement positionné sur l'écran et l'objet de l'invention est de définir les moyens permettant d'obtenir différentes valeurs de tension d'anode avec précision pour l'alimentation d'un tube multichrome.

Différentes solutions ont été déjà proposées pour la réalisation d'une alimentation très haute tension commutable.

Il est connu du document US—A—3 892 977 d'utiliser une source principale et des sources auxiliaires associées à des commutateurs, les sources auxiliaires et les commutateurs étant connectés de sorte que leur combinaison avec la source principale donne en fonction de la commande des commutateurs l'une ou l'autre des quatre tensions appliquées à l'anode du tube.

L'objet de l'invention est une alimentation très haute tension commutable pour tube cathodique multichrome qui soit exemple des inconvénients qui ont été rappelés.

Suivant l'invention, l'alimentation très haute tension commutable pour tube à pénétration comporte une source principale très haute tension et des sources auxiliaires haute tension susceptibles de lui être combinées par des commutateurs commandés, de façon que leur combinaison avec la source principale donne en fonction de la commande desdits commutateurs l'une ou l'autre de quatre valeurs différentes de tensions appliquées entre l'anode et la masse du tube, caractérisée en ce que les sources auxiliaires étant connectées en série de manière à former un point milieu, les commutateurs respectivement sont connectés deux à deux en parallèle entre un point commun, et le point milieu, respectivement par l'intermédiaire d'une et de deux des sources auxiliaires, la tension obtenue entre lesdits points et en fonction de la commande des commutateurs étant ajoutée à la très haute tension de la source principale pour former l'une ou l'autre des quatre valeurs appliquées à l'anode du tube, et en ce que, le blindage du tube n'étant pas réuni à la masse et le tube présentant deux capacités parasites en série entre son anode et la masse, une première capacité entre anode et blindage et une deuxième capacité entre blindage et masse, l'alimentation comprend, en outre, un premier et un deuxième circuit oscillant de récupération d'énergie à interrupteur commandé respectivement connectés entre le point commun, et le point milieu, chacune des capacités, servant de capacité pour un des circuits oscillants, la commande de l'un et/ou l'autre de ces circuits oscillants lors de la commande des commutateurs associés aux sources auxiliaires portant le potentiel de la capacité de charge globale du tube à l'une ou l'autre de quatre valeurs correspondant aux quatre valeurs de tension à appliquer à l'anode du tube.

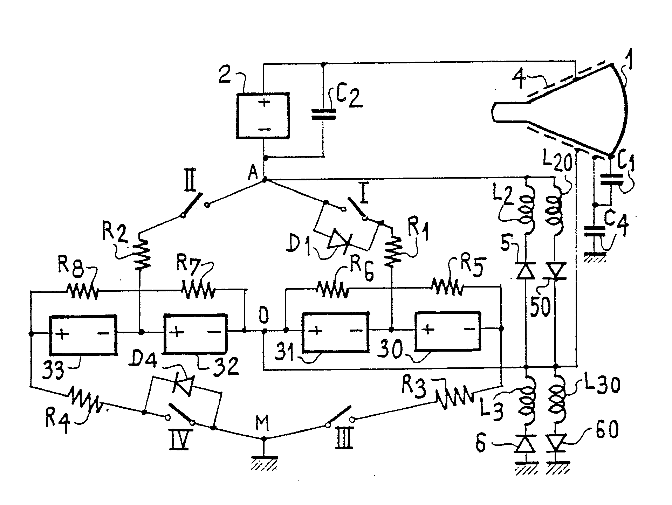

D'autres avantages et caractéristiques de l'invention apparaîtront au cours de la description qui suit, d'exemples de réalisation donnés à l'aide de la figure unique qui représente une alimentation très haute tension commutable sur quatre niveaux comportant un dispositif de récupération de l'énergie de commutation.

Le schéma de la figure unique représente une alimentation très haute tension commutable sur quatre niveaux comportant notamment un dispositif de récupération de l'énergie. Cette alimentation comporte une source principale de tension nominale élevée et de sources auxiliaires de tensions nominales plus faibles, avec des commutateurs permettant de combiner les différentes sources pour obtenir les tensions à appliquer au tube multichrome et donc les quatre couleurs fondamentales désirées.

Quatre couleurs peuvent être obtenues sur l'écran du tube multichrome 1, le rouge, l'orange, le jaune et le vert. Des couleurs intermédiaires peuvent également être obtenues, résultat du mélange du rouge et du vert, couleurs fondamentales suivant les tensions choisies. Dans un exemple de réalisation matérielle de l'invention, des tensions correspondant aux couleurs choisies sont les suivantes:

rouge 10 KV

orange 13,2 KV

jaune 14,8 KV

vert 18 KV

Ces tensions sont appliquées sur la charge capacitive que représente l'anode du tube multichrome et son blindage, la capacité d'anode du tube soit $C_1$ et la capacité du blindage du tube soit $C_4$ étant reportées sur les sources commutables, à travers la source de tension fixe. La source principale de tension fixe 2 est découplée par une capacité $C_2$. Cette réalisation comporte quatre sources de valeurs de tension différentes 30, 31, 32, 33, qui sont combinées avec la source de tension principale 2 par l'intermédiaire du jeu des commutateurs I, II, III et IV. A titre d'exemple, les valeurs des tensions auxiliaires sont de 800 V pour les sources 30 et 33 et 1600 V pour les sources 31 et 32.

Le fonctionnement de cette alimentation commutable sur quatre niveau est le suivant:

Les commutateurs I, II, III et IV qui fonctionnent par paires, assurent des commutations des sources auxiliaires, c'est-à-dire réalisent les combinaisons de ces sources avec la source principale 2 pour l'obtention des différentes tensions à appliquer à l'anode du tube multichrome 1.

Lorsque les commutateurs II et III par exemple sont fermés, les deux autres I et IV étant ouverts, la tension globale appliquée à l'anode du tube multichrome 1 est de 14 + 1,6 + 1,6 + 0,8 = 18 KV correspondant au vert.

Lorsque les commutateurs I et III sont fermés, les deux autres II et IV étant ouverts, la tension globale appliquée à l'anode du tube multichrome 1 est de 14 + 0,8 = 14,8 KV correspondant au jaune.

Lorsque les commutateurs II et IV sont fermés, les deux autres I et III étant ouverts, la tension globale appliquée à l'anode du tube multichrome 1 est de 14 − 0,8 = 13,2 KV correspondant à l'orange.

Enfin lorsque les commutateurs I et IV sont fermés, les deux autres II et III étant ouverts, la tension globale appliquée à l'anode du tube multichrome 1 est de 14 − (1,6 + 1,6 + 0,8) = 10 KV correspondant au rouge.

Dans une réalisation préférentielle, les commutateurs, jouant le rôle d'interrupteurs, sont constitués par des thyristors montés en série dont la commande se fait par l'intermédiaire de transformateurs d'impulsions, assurant une commande simultanée des thyristors d'un commutateur.

Les interrupteurs doivent pouvoir supporter 4 KV, c'est-à-dire la tension des sources auxiliaires 30 à 33. Ils peuvent être mécaniques, ou comporter des tubes à vide, des tubes à gaz, des transistors. Dans un exemple préféré, ils sont constitués par des thyristors montés en série, déclenchés par un transformateur d'isolement comprenant autant d'enroulements secondaires qu'il y a de thyristors et un primaire auquel est appliquée la tension de commande qui est appliquée tant que l'on veut maintenir le commutateur fermé.

Par ailleurs, les sources auxiliaires sont représentées distinctes les unes des autres. En fait, de façon préférentielle, on fait appel à deux multiplicateurs de tension à trois étages branchés sur un même transformateur de convertisseur, chaque étage donnant une tension de 800 V. Pour des raisons dues à la pratique, et au fait que l'on utilise des thyristors, il faut prévoir de placer des diodes $D_1$, $D_4$ respectivement en parallèle sur le interrupteurs I et IV. En effet, dans ce montage les sources de tension débitent aussi bien à la charge qu'à la décharge des capacités $C_1$ et $C_4$. Il n'en est pas de même pour le courant anodique du tube cathodique. Quand une source fournit une tension négative pour décharger une capacité, le courant anodique a un sens opposé au courant de décharge. La source de tension et le commutateur sont alors traversés par un courant inverse qui peut bloquer les diodes du multiplicateur de tension utilisé pour produire la tension négative nécessaire et en modifier énormément la valeur. Il en est de même pour les interrupteurs électroniques à conduction unilatérale, comme les thyristors. La présence des diodes $D_1$ et $D_4$ rétablit alors la conduction.

En ce qui concerne les sources de tension, on évite leur blocage en prévoyant des charges montées en parallèle sur leurs bornes, soit $R_5$ à $R_8$.

La charge capacitive du tube a été scindée en deux ce qui permet de tenir compte du blindage magnétique disposé autour de l'anode du tube.

Ce blindage 4 n'est pas relié à la masse de sorte que la capacité anode masse se trouve réalisé par une capacité anode blindage $C_1$ en série avec une capacité blindage masse, $C_4$.

Cette disposition des capacités $C_1$ et $C_4$ du tube multichrome, associé au fait que les sources auxiliaires présentent un point milieu, permet de faire varier chacune des capacités sur deux niveaux et d'y associer un dispositif de récupération d'énergie.

Le point milieu 0 des sources auxiliaires est connecté au blindage 4 du tube multichrome, mais le fonctionnement de l'alimentation commutable n'est pas modifié pour autant. Le circuit de récupération est constitué lui, par un circuit oscillant comprenant une self inductance et une capacité. Ce dispositif de récupération comprend un circuit de récupération associé à chaque commutateur, et deux circuits sont associés à une des capacités $C_1$ et $C_4$. Ainsi les selfs inductances $L_2$ et $L_{20}$ sont associées à la capacité $C_1$ et les selfs inductances $L_3$, $L_{30}$ sont associées à la capacité $C_4$.

Le fonctionnement d'une tel circuit de récupération est basé sur les propriétés des circuits résonnants LC. La capacité se charge à une certaine tension. En fermant ensuite un interrupteur (5.50, 6.60) associé au circuit, l'énergie de la capacité est transférée à la self sous la forme d'un courant $Li^2/2$, où i représente le courant. La self inductance restitue ensuite son énergie à la capacité. Le transfert d'énergie ainsi réalisé est complet lorsque le courant dans la self inductance passe par 0. Si l'on ouvre alors l'interrupteur, on a fait passer la capacité du circuit d'une valeur de tension positive à une valeur égale négative sans autre perte d'energie que celle due à la résistance du circuit oscillant.

Si on désire changer la tension aux bornes de la capacité $C_1$ par exemple, on ouvre au préalable les commutateurs I et II, et on applique dans l'exemple décrit, une impulsion de commande sur les thyristors formant les interrupteurs 50 et 5. Seul sera excité le circuit résonnant ayant la bonne polarité, c'est-à-dire suivant le cas le circuit comprenant la self inductance $L_2$ ou la self inductance $L_{20}$. L'énergie de la capacité $C_1$ est alors transformée en courant dans la self effectivement en circuit $L_2$ ou $L_{20}$ pour être restituée à la capacité $C_1$ sous la forme d'une tension de signe opposé au précédent. Une petite partie de l'énergie parcourant ce circuit est dissipée dans sa résistance interne et la tension de la capacité $C_1$ n'aura pas tout à fait la même valeur absolue. Cette tension peut néanmoins être complétée en fermant le commutateur I ou le commutateur II suivant le signal de la tension à compléter. L'énergie à fournir par les sources 31 ou 32 n'est plus alors que celle dissipée dans les circuits $L_2C_1$ ou $L_{20}C_1$. Dans le cas où la capacité $C_4$ intervient, la récupération de l'énergie se fait de la même manière avec l'aide des self-inductances $L_3$ ou $L_{30}$ associées respectivement aux interrupteurs 6 ou 60.

On notera que les circuits de récupération décrits peuvent fonctionner simultanément et que le temps de commutation est celui du circuit oscillant soit $T = \pi\sqrt{LC}$, auquel il convient néanmoins de rajouter celui mis par la source de tension pour compléter éventuellement la charge du l'un ou de l'autre des condensateurs $C_1$, $C_4$.

On a ainsi décrit une alimentation très haute tension commutable pour tube multichrome et un circuit de récupération de l'énergie qui peut lui être associé.

**Revendications**

1. Alimentation très haute tension commutable pour tube à pénétration comportant une source principale (2) très haute tension et des sources auxiliaires haute tension (30 à 33) susceptibles de lui être combinées par des commutateurs commandés (I à IV), de façon que leur combinaison avec la source principale (2) donne en fonction de la commande desdits commutateurs l'une ou l'autre de quatre valeurs différentes de tensions appliquées entre l'anode et la masse du tube, caractérisée en ce que les sources auxiliaires (30 à 33) étant connectées en série de manière à former un point milieu (0), les commutateurs (I, II) respectivement (III, IV) sont connectés deux à deux en parallèle entre un point commun (A), (M) et le point milieu (0), respectivement par l'intermédiaire d'une (31, 32) et de deux (30, 31); (32, 33) des sources auxiliaires, la tension obtenue entre lesdits points (A) et (M) en fonction de la commande des commutateurs étant ajoutée à la très haute tension de la source principale (2) pour former l'une ou l'autre des quatre valeurs appliquées à l'anode du tube, et en ce que, le blindage du tube n'étant pas réuni à la masse et le tube présentant deux capacités parasites en série entre son anode et la masse, une première capacité ($C_1$) entre anode et blindage et une deuxième capacité ($C_4$) entre blindage et masse, l'alimentation comprend, en outre, un premier et un deuxième circuit oscillant de récupération d'énergie à interrupteur commandé (5, 50; 6, 60) respectivement connectés entre le point commun (A), (M), et le point milieu (0), chacune des capacités ($C_1$), ($C_4$) servant de capacité pour un des circuits oscillants, la commande de l'un et/ou l'autre de ces circuits oscillants lors de la commande des commutateurs associés aux sources auxiliaires portant le potentiel de la capacité de charge globale du tube à l'une ou l'autre de quatre valeurs correspondant aux quatre valeurs de tension à appliquer à l'anode du tube.

2. Alimentation très hautetension, selon la revendication 1, caractérisée en ce qu'elle comporte quatre sources auxiliaires (30, 31, 32, 33).

3. Alimentation très haute tension, selon la revendication 2, caractérisé en ce que les commutateurs (I à IV) sont des thyristors, deux ou moins de ces thyristors sont shuntés par une diode ($D_1$, $D_4$).

**Patentansprüche**

1. Schaltbare Höchstspannungsversorgung für Penetrations-Röhre, mit einer Höchstspannungs-Hauptquelle (2) und Hochspannungs-Hilfsquellen (30 bis 33), die mit ihr durch gesteuerte Schalter (I bis IV) derart kombiniert werden können, daß ihre Kombination mit der Hauptquelle (2) in Abhängigkeit von der Steuerung der genannten Schalter den einen oder anderen von vier verschiedenen Spannungswerten ergeben kann, welche zwischen Anode und Masse der Röhre angelegt werden, dadurch gekennzeichnet, daß die Hilfsquellen (30 bis 33) derart in Reihe geschaltet sind, daß sie einen Mittelpunkt (0) bilden, wobei die Schalter (I, II) bzw. (III, IV) zwei zu zwei parallel zwischen einen gemeinsamen Punkt (A, M) und den Mittelpunkt (0) jeweils über eine (31, 32) bzw. über zwei (30, 31; 32, 33) der Hilfsquellen geschaltet sind, wobei die zwischen den Punkten (A) und (M) in Abhängigkeit von der Steuerung der Schalter erhaltene Spannung der Höchstspannung der Hauptquelle (2) hinzugefügt wird, um den einen oder anderen der vier Werte zu bilden, welche an die Anode der Röhre angelegt werden, und daß, wenn die Abschirmung der Röhre nicht mit Masse verbunden ist und die Röhre zwei Störkapazitäten in Reihe zwischen ihrer Anode und Masse, nämlich eine erste Kapazität ($C_1$) zwischen Anode und Abschirmung und eine zweite Kapazität ($C_4$) zwischen Abschirmung und Masse, aufweist, die Versorgung ferner einen ersten und einen zweiten Energierückgewinnungs-Oszillatorkreis mit gesteuertem Unterbrecher (5, 50; 6, 60) enthält, die jeweils zwischen den gemeinsamen Punkt (A, M) und den Mittelpunkt (0) geschaltet sind, wobei jede der Kapazitäten ($C_1$, $C_4$) als Kapazität für einen der Oszillatorkreise dient und die Steuerung des einen und/oder anderen dieser Oszillatorkreise bei der Steuerung der den Hilfsquellen zugeordneten Schalter das Potential der Gesamtladekapazität der Röhre auf den einen oder anderen der vier Werte bringt, welche den vier an die Anode der Röhre anzulegenden Spannungswerten entsprechen.

2. Höchstspannungsversorgung nach Anspruch 1, dadurch gekennzeichnet, daß sie vier Hilfsquellen (30, 31, 32, 33) enthält.

3. Höchstspannungsversorgung nach Anspruch 2, dadurch gekennzeichnet, daß die Schalter (I vis IV) Thyristoren sind, wobei wenigstens zwei dieser Thyristoren durch eine Diode ($D_1$, $D_4$) überbrückt sind.

## Claims

1. Switchable very high voltage supply for a penetration tube, comprising a very high voltage primary source (2) and high voltage auxiliary sources (30 to 33) susceptible to be combined therewith through controlled switches (I to IV), in such a manner that their combination with the primary source (2) provides, as a function of the control of said switches, one or the other of four different voltage values applied between the anode and ground of the tube, characterized in that the auxiliary sources (30 to 33) being connected in series in a manner to form a center point (0), the switches (I, II) respectively (III, IV) are connected two by two in parallel between a common point A, M) and the center point (0), respectively through one (31, 32) and two (30, 31; 32, 33) of the auxiliary sources, the voltage obtained between said points (A) and (M) as a function of the control of the switches being added to the very high voltage of the primary source (2) to form one or the other of the four values applied to the anode of the tube, and in that, the screening of the tube not being connected to ground and the tube having two spurious capacities in series between its anode and ground, a first capacity ($C_1$) between the anode and the screening and a second capacity ($C_4$) between the screening and ground, the supply further comprises a first and a second energy recovery oscillating circuit with a controlled interrupter (5, 50; 6, 60) respectively connected between the common point (A), (M) and the center point (0), each of the capacities ($C_1$, $C_4$) being used as a capacity of one of the oscillating circuits, the control of one and/or the other of these oscillating circuits upon control of the switches associated with the auxiliary sources biasing the overall load capacity of the tube to one or the other of four values corresponding to the four voltage values to be applied to the anode of the tube.

2. Very high voltage supply according to claim 1, characterized in that it comprises four auxiliary sources (30, 31, 32, 33).

3. Very high voltage supply according to claim 2, characterized in that the switches (I to IV) are thyristors, at least two of these thyristors being shunted by a diode ($D_1$, $D_4$).